# EUROPEAN PATENT SPECIFICATION

(11) **EP 1 624 766 B1**
(45) Date of publication and mention of the grant of the patent: **02.06.2010**
(21) Application number: 04730570.1
(22) Date of filing: 30.04.2004
(51) Int. Cl.: A41D 27/24, D05B 27/10, B29C 53/36, B29C 65/50

(54) **HEMMING MACHINE**
FALZMASCHINE
MACHINE A OURLER

(30) Priority: 30.04.2003 GB 0309904
(43) Date of publication of application: 15.02.2006
(73) Proprietor: Sew Systems Limited, Oadby Leicester LE2 5LQ (GB)
(72) Inventor: TURNER, Anthony David, A D Turner Limited, Oadby, LeicesterLe2 5LH (GB)
(74) Representative: Charig, Raymond Julian
(86) International application number: PCT/GB2004/001871
(87) International publication number: WO 2004/095961

(56) References cited:
- WO-A-03/008181
- GB-A- 1 498 957
- GB-A- 2 272 398
- US-A- 2 378 730
- US-A- 3 402 089

## Description

The invention relates to a hemming machine for hemming a textile article using an adhesive strip.

References herein to "hemming" are intended to encompass all methods of finishing an edge of fabric with a folded edge, including folding the edge of fabric and securing it in place to form a hem, folding an additional strip of fabric about the edge of fabric and securing it in place in order to bind the edge of fabric or folding the edges of two pieces of fabric and securing the folded edges together to form a seam.

References herein to "an adhesive strip" are intended to encompass all forms in which a hot melt and/or pressure adhesive may be provided in a strip-like manner, including a thread of hot melt and/or pressure adhesive; a strip of hot melt and/or pressure adhesive film either alone or on a carrier substrate, such as an elastic substrate; and an elastic or other carrier substrate incorporating a hot melt and/or pressure adhesive e.g. Grilon (RTM) threads in the elastic or carrier substrate or small amounts of hot melt and/or pressure adhesive periodically located on the surface of the elastic or carrier substrate.

It is desirable to minimise the appearance of seams in textile articles, particularly garments, during manufacture in order to produce a smoother line in the finished article. This is particularly applicable to ladies underwear, shirts and any under or outer garments requiring a hem, and can be achieved by forming the article so that it is substantially free from seams. It can also be achieved by minimising the amount of sewing required to form a seam.

GB 1 498 957 discloses a method for joining an edge region of one piece of sheet material to an edge region of a second piece of material. The method involves stitching the edges together at a distance from and parallel to each edge to be joined to leave two edge strips. Each edge strip is then folded over to lie flat against the respective piece of sheet material and adhesive is applied in the form of a thread of thermoplastic adhesive material within each fold. Each region is then pressed to bond the adhesive thereto.

GB 1 498 957 also discloses apparatus for folding over each edge strip and adhering each fold to the respective sheet of material. The apparatus includes a folding device for turning over the edge strip formed between the stitching and the edges. It also includes conveying and pressure members, a thread feed device for feeding an adhesive thermoplastic thread into the folds, at least one heating device for softening the thread and a pressing device for pressing the folds to bond the adhesive thereto.

US 2 378 730 discloses a sewing machine attachment including a belt feed.

One manner in which the amount of sewing can be minimised is to form a seam using alternative fixing means to sewing such as, for example, hot melt film.

The use of hot melt film to adhere two layers of fabric together requires the provision of pressure and heat. This is commonly provided in laminating machines by two heated belt feeds arranged to feed the layers of fabric therebetween while applying heat and pressure to melt the hot melt film and adhere the layers of fabric together.

However, laminating machines incorporating two heated belt feeds are not suitable for creating a shaped hem, i.e. a hem which follows a curved contour, since prior known laminating machines only operate in a straight line.

According to an aspect of the invention there is provided a hemming machine for hemming a textile article using a hot melt adhesive strip comprising a support and a heated feed assembly arranged to draw a textile article across the support and heat the adhesive through the textile article, the feed assembly including a belt feed arranged to move between a first position where the belt feed is spaced from the support, to permit insertion of a textile article between the belt feed and the support, and a second position where the belt feed is moved towards the support such that, when a textile article is located between the belt feed and the support, the belt feed presses the textile article against the support.

The provision of a feed assembly arranged to draw the textile article across the support allows the textile article to be fed through the machine at a constant rate, reducing the risk of the fabric becoming puckered and allowing the machine to be used to hem textile articles having curved edges as well as straight edges.

According to a second aspect of the invention there is provided a sewing machine conversion kit to convert a sewing machine into a hemming machine for hemming a textile article using an adhesive strip comprising an attachment adapted to replace a sewing machine presser foot, the attachment including a heated belt feed.

According to a third aspect of the invention there is provided a method of hemming a textile article using a hot melt adhesive strip comprising the steps of:
(i) folding a marginal edge of the textile article to form a hem and inserting an adhesive strip such that the adhesive strip is located in the internal space of the hem; and
(ii) feeding the hem between a belt feed and a support, the belt feed applying pressure to the hem to seal the hem.

Other advantageous features of the invention are defined in the dependent claims.

Preferred embodiments of the invention will now be described, by way of non-limiting examples, with reference to the accompanying drawings in which:
Figure 1 shows a hemming machine according to an embodiment of the invention;
Figure 2 shows a support and feed assembly of the hemming machine of Figure 1;
Figure 3 shows the support and a secondary feed assembly of the hemming machine of Figure 1;
Figure 4 shows a presser foot and driven belt of the feed assembly of Figure 2;
Figures 5 and 6 show a hem-forming foot of the hemming machine of Figure 1;
Figures 7 and 8 show a hot melt strip delivery assembly of the hemming machine of Figure 1;
Figure 9 is a schematic representation of a hem as it is fed into the hemming machine of Figure 1;
Figure 10 is a cross-sectional view along the line A-A of Figure 9; and
Figure 11 is a cross-sectional view along the line B-B of Figure 9.

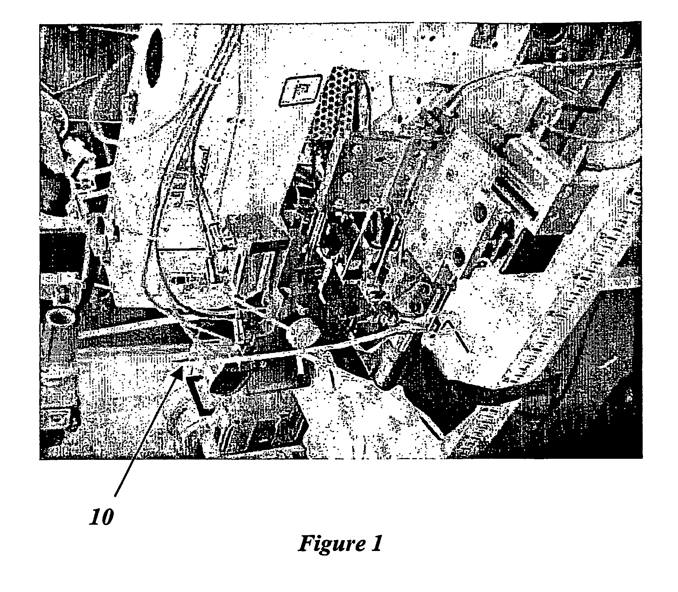

A hemming machine 10 according to an embodiment of the invention is shown in Figure 1.

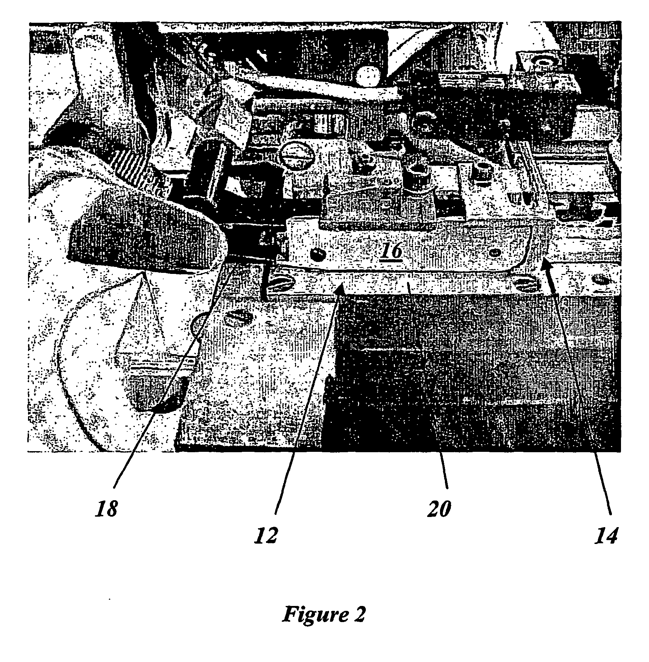

The hemming machine 10 includes a support 12 and a feed assembly 14 including a heated presser foot 16 and a driven belt 18 extending around the presser foot 16 to form a heated belt feed (Figure 2). The belt 18 is preferably formed of Teflon (RTM).

The presser foot 16 is preferably movable between a first position where the belt 18 is spaced from the support 12, and a second position where the belt 18 is moved towards the support 12. The extent of movement of the presser foot 16 may be adjustable to adjust the position of the belt 18 relative to the support 12 in the first and second positions.

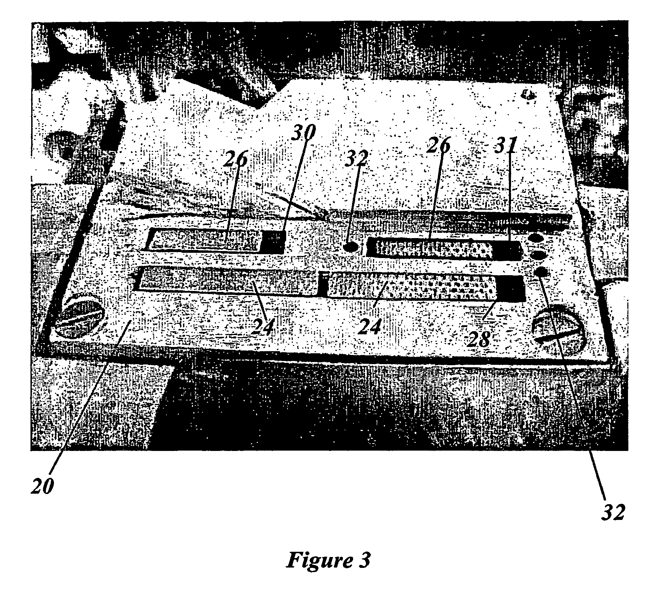

In the embodiment shown in Figure 1, the support 12 is in the form of a plate 20, and the hemming machine 10 includes a second feed assembly 22 having a pair of claw feeds 24,26, each claw feed protruding through an aperture 28,30,31 formed in the plate 20 (Figure 3). The claw feeds 24,26 may be arranged to provide a differential feed.

The use of a differential feed, in combination with the heated belt feed, is advantageous when the hemming machine 10 is being used to form a hem in a relatively delicate fabric. This is because the differential feed assists in feeding the fabric through the machine 10, and thereby reduces the risk of the fabric rucking or puckering. It thereby assists in producing a smoother hem.

In other embodiments, the second feed assembly 22 may be modified to include a single claw feed, or to include a driven belt extending around the plate so as to provide a secondary feed over the surface of the plate 20. In yet further embodiments, the second feed assembly 22 may be excluded.

In embodiments where the second feed assembly 22 is excluded, the plate 20 may be covered with a material having a relatively low co-efficient of friction such as, for example, Teflon (RTM). This reduces the amount of friction generated between the plate 20 and a textile article being drawn over the plate 20 during use.

Alternatively, the plate 20 may include a free-running belt (preferably formed of Teflon (RTM)) extending around the plate 20 in alignment with the belt 18 of the feed assembly 14 such that it is free to move about the plate 20. The provision of the free-running belt reduces the amount of friction generated between the plate 20 and a textile article being drawn over the plate 20.

Preferably the plate 20 includes a plurality of output nozzles 32 connected to a source of heated air (not shown) and arranged to direct jets of heated air towards the driven belt 18.

In addition, or alternatively, the plate 20 may be heated by means of a heating element (not shown) located beneath the plate 20.

The provision of output nozzles 32 directing heated air towards the driven belt 18, and or the provision of a heated plate 20, reduces the amount of heat required from the heated belt feed, in use, to melt a hot melt strip enveloped between two layers of fabric. It thereby improves the efficiency of the hemming machine 10.

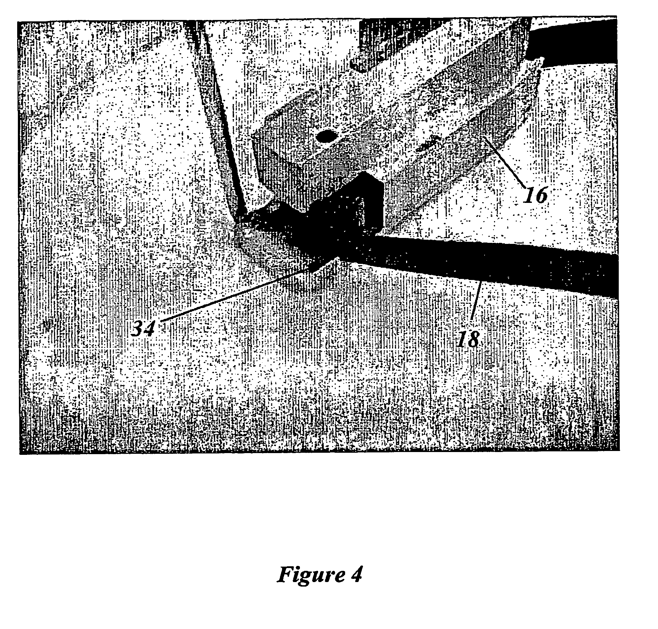

Preferably, as shown in Figure 4, the heated presser foot 16 includes an output nozzle 34 connected to a source of heated air (not shown). The presser foot output nozzle 34 is preferably arranged to direct a jet of heated air to a position in front of and downstream of the driven belt 18.

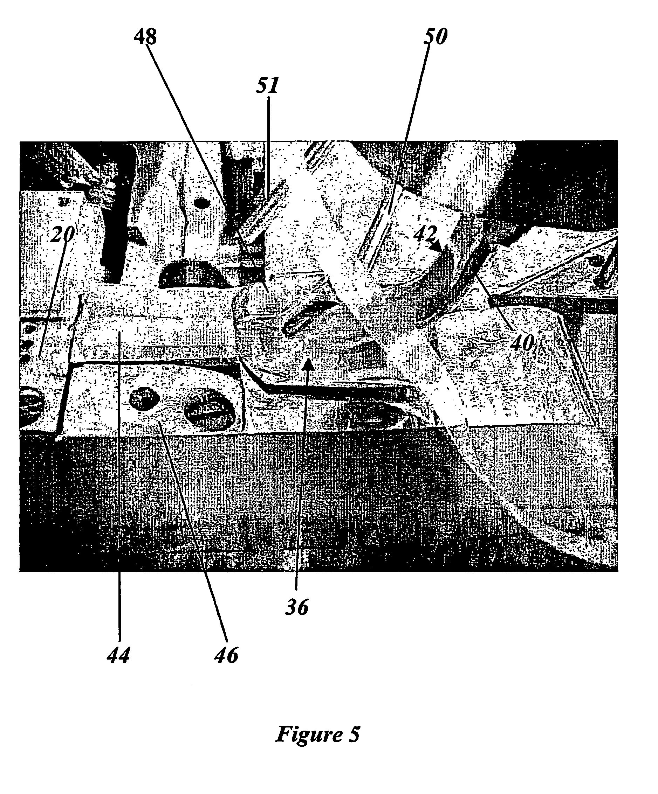

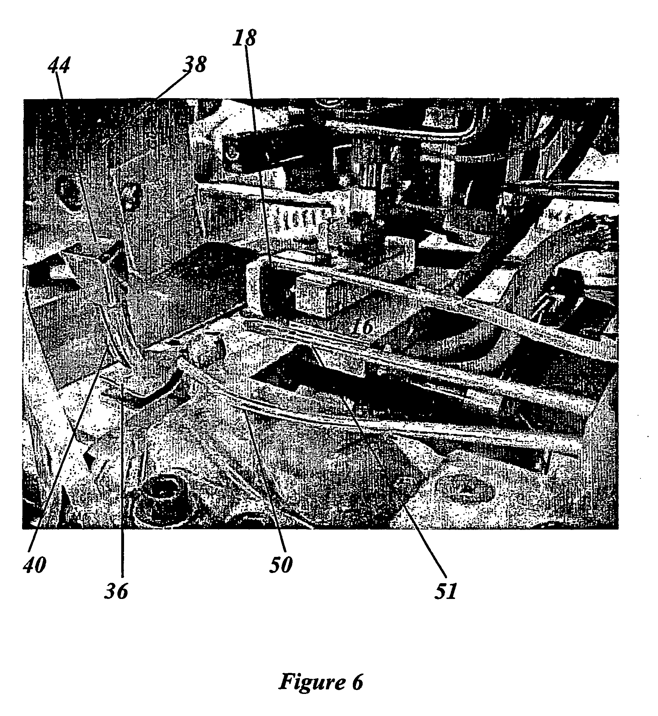

The hemming machine 10 preferably includes a hem-forming foot 36 positioned downstream of the driven belt 18 (Figures 5 and 6). The foot 36 is mounted to a hot melt strip delivery assembly 38 by means of a hollow leg 40 which defines a channel 42 to receive a hot melt strip 44.

The channel 42 terminates in an aperture (not shown) on a lower surface of the foot 36, allowing the hot melt strip 44 to pass out of the bottom of the foot 36. The hemming machine 10 preferably includes an additional support 46 located beneath the hem-forming foot 36 and extending towards the driven belt 18, thereby providing a support surface for the hot melt strip 44.

An upper surface of the foot 36 is preferably shaped to form a sloped surface 48, and an air nozzle 50 is preferably attached to the hot melt strip delivery assembly 38 to direct a jet of air towards the sloped surface 48.

A second air nozzle 51 is preferably attached to the hot melt strip delivery assembly 38 to direct a jet of air towards the path of the hot melt strip 44 from the hem-forming foot 36 and the feed assembly 14, midway along its length.

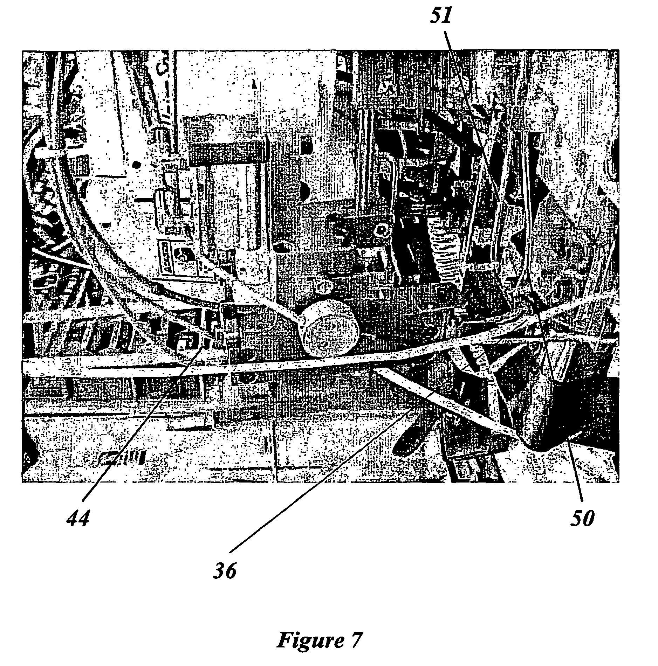

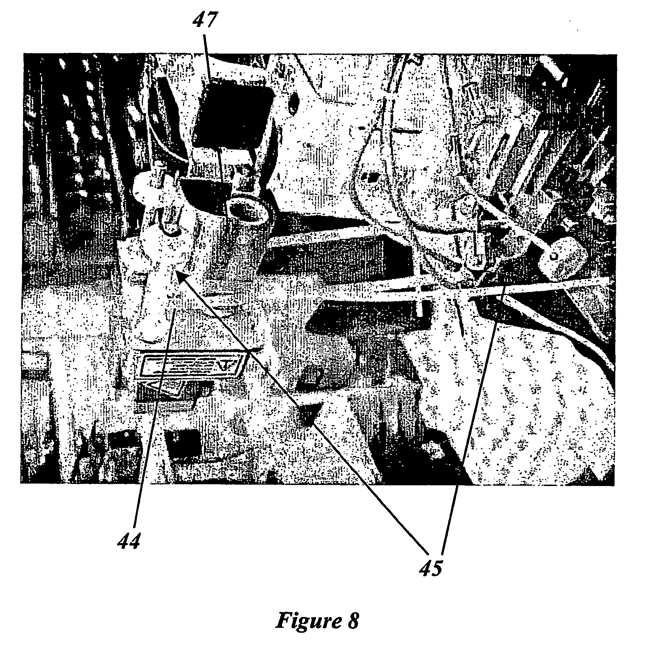

The hot melt strip delivery assembly 38 (Figures 7 and 8) includes a roll 47 of hot melt strip 44 and a feeding mechanism 45 to feed the hot melt strip into the channel 42 in the hollow leg 40 of the hem-forming foot 36.

The hot melt strip delivery assembly 38 preferably includes a control device to control the rate at which the hot melt strip 44 is delivered to the hem-forming foot 36. The control device may also be adapted such that, at the start of a hemming procedure, the control device can be activated to deliver a predetermined amount of the hot melt strip 44 to the hem-forming foot 36.

The amount of the hot melt strip 44 delivered to the hem-forming foot 36 at the start of a hemming procedure is preferably chosen such that the hot melt strip 44 extends from the hem-forming foot 36 to the edge of the plate 20, as shown in Figure 5.

The hot melt strip 44 shown in Figure 5 is a strip of hot melt film.

In other embodiments of the invention it is envisaged that the hot melt strip 44 may be a laminated structure including an elastic substrate having a hot melt film laminated to one or both of its surfaces. The elastic substrate could, for example, be a strip of elastomeric material or a woven strip of elastomeric yarns. In use, a laminated structure of this type permits the formation of an elasticated hem.

In yet further embodiments of the invention, it is envisaged that an elastic or other carrier substrate may incorporate hot melt adhesive. For example, the substrate may incorporate Grilon (RTM) threads or small amounts of hot melt adhesive located periodically on the surface of the substrate.
Once the predetermined amount of the hot melt strip 44 has been delivered to the hem-forming foot 36, the edge of a piece of fabric to be hemmed is passed under the hem-forming foot 36 so that the hot melt strip 44 is located between the foot 36 and the fabric.

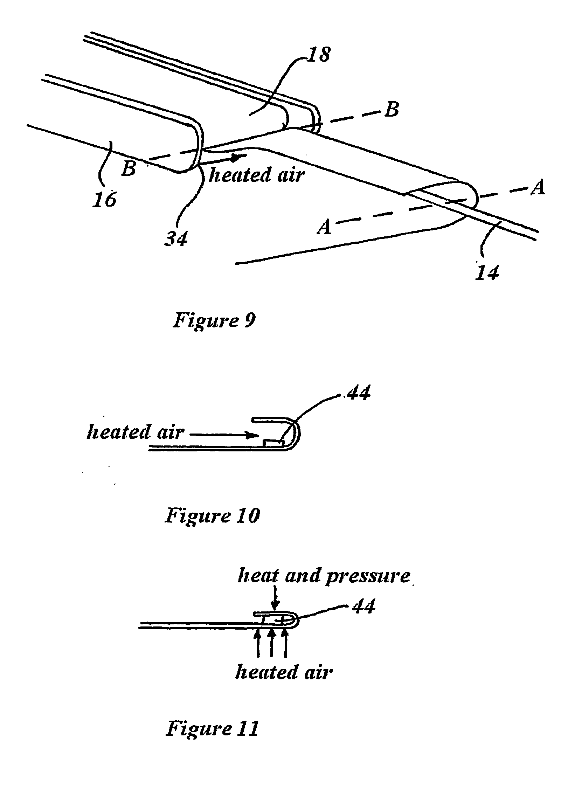

The fabric is positioned such that its' marginal edge protrudes from the opposite side of the foot 36 and can be folded to rest on the sloped surface 48 of the hem-forming foot 36, thereby forming a hem enveloping the hot melt strip, as shown schematically in Figures 9 and 10. A jet of air provided by the air nozzle 50 forces the fabric against the sloped surface 48, and so prevents the fabric from unfolding.

A jet of air provided by the second air nozzle 51 preferably forces the fabric towards the additional support 46 midway between the hem-forming foot 36 and the presser foot 16 to prevent the fabric unfolding between the hem-forming foot 36 and the presser foot 16.

The heated presser foot 16 is moved to its second position such that the driven belt 18 is moved away from the plate 20. The hem, containing the hot melt strip 44 is then located between the driven belt 18 and the plate 20 before moving the heated presser foot 16 back to its first position to press the hem against the plate 20.

The driven belt 18 is then driven to draw the hem across the plate 20 while applying heat and pressure thereto to melt the hot melt strip 44 and seal the hem, as shown schematically in Figure 11.

Simultaneously, the control device of the hot melt strip delivery assembly 38 feeds the hot melt strip 44 to the hem-forming foot 36 to continue feeding the hot melt strip 44 into the hem prior to it being drawn under the heated presser foot 16 by the driven belt 18.

While the driven belt 18 draws the hem across the plate 20, the presser foot output nozzle 34 preferably directs heated air into the internal space of the hem, downstream of the driven belt 18, as shown schematically in Figure 9. This serves to pre-melt the hot melt strip 44 before it passes under the driven belt 18. It therefore reduces the amount of heat required from the heated presser foot 16 to seal the hem.

In addition, heat is preferably applied to the hem from beneath either via heated air from output nozzles 32 provided in the plate 20 or from a heating element located beneath the plate 20. This also reduces the amount of heat required from the heated presser foot 16 to seal the hem.

Since the use of heated air from output nozzles 32 in the plate 20, and from a presser foot output nozzle 34, reduce the amount of heat required from the heated presser foot 16, the temperature of the presser foot 16 may be reduced. This is particularly advantageous when the fabric is relatively delicate since it reduces the risk of burning or marking the fabric.

In embodiments where the hemming machine 10 includes a second feed assembly 22, in the form of claw feeds 24,26 or a second driven belt, the second feed assembly 22 is driven at the same time as the driven belt 18 to assist the driven belt 18 in drawing the envelope of fabric across the plate 20.

In other embodiments, the feed assembly 14 may be adapted so that it does not apply heat to the hem during a hemming procedure.

In embodiments using a holt melt adhesive strip, the hot melt adhesive strip may be melted by directing a jet of heated air into the internal space of the hem enveloping the hot melt strip downstream of the feed assembly. Further heating, to assist the melting of the hot melt strip, may be provided by jets of heated air directed at the underside of the hem as the hem is drawn between the feed assembly 14 and the support 12.

In embodiments using a pressure adhesive strip the hem is sealed by the pressure of the feed assembly 14 against the support 12.

While the invention has been described with specific reference to the formation of a hem along the edge of a piece of fabric, it is envisaged that the hemming machine may be used to secure two pieces of fabric together where one of the pieces of fabric is folded about an edge of the other piece of fabric such as, for example, in a binding or seaming operation.

## Claims

1. A hemming machine (10) for hemming a textile article using a hot melt adhesive strip (44) comprising a support (12) and a heated feed assembly (14) arranged to draw a textile article across the support and heat the adhesive through the textile article, the feed assembly (14) including a belt feed arranged to move between a first position whereat the belt feed is spaced from the support, to permit insertion of a textile article between the belt feed and the support, and a second position whereat the belt feed is moved towards the support such that, when a textile article is located between the belt feed and the support, the belt feed presses the textile article against the support.

2. A hemming machine (10) according to Claim 1 wherein the belt feed is heated.

3. A hemming machine (10) according to Claim 2 wherein the heated belt feed includes a driven belt (18) extending around a heated body (16) which transmits heat to the belt.

4. A hemming machine (10) according to any preceding claim further including a second feed assembly (22), the first and second feed assemblies (14, 22) being arranged to feed a textile article across the support (12) from opposite sides of the textile article.

5. A hemming machine (10) according to any preceding claim wherein the support (12) includes a plate member (20).

6. A hemming machine (10) according, to Claim 5 wherein the plate member (20) is covered, at least in part, in Teflon (RTM).

7. A hemming machine (10) according to Claim 5 or Claim 6 wherein a free-running belt extends around the plate member (20) such that it contacts an underside of a textile article drawn across the plate member by the heated belt feed.

8. A hemming machine (10) according to Claim 4 and Claim 5 or Claim 6 wherein the second feed assembly (22) includes a driven belt extending around the plate member (20) such that it contacts an underside of a textile article drawn across the plate member by the belt feed.

9. A hemming machine (10) according to any of Claims 5-8 wherein the plate member (20) is heated.

10. A hemming machine (10) according to any preceding claim wherein the or each belt is formed of Teflon (RTM).

11. A hemming machine (10) according to Claim 4 wherein the second feed assembly (22) includes a claw feed.

12. A hemming machine (10) according to Claim 11 wherein the second feed assembly (22) includes a pair of claw feeds (24, 26) arranged to provide a differential feed.

13. hemming machine (10) according to Claim 11 or Claim 12 wherein the support (12) includes a plate member (20) and the or each claw feed (24, 26) is arranged to protrude through an aperture (28, 30, 31) provided in the plate member (20).

14. A hemming machine (10) according to any preceding claim further including a hem forming means (36) located downstream of the belt feed.

15. A hemming machine (10) according to any one or more of Claims 2 to 14 further including a nozzle (34) connected to a source of heated air and arranged to direct heated air into the internal space of a hem formed in a textile article containing a hot melt strip (44) to pre-melt the hot melt adhesive strip, downstream of the heated belt feed.

16. A hemming machine (10) according to Claim 3 or Claim 15 when dependent on Claim 3 wherein the nozzle (34) is provided in the heated body (16).

17. A hemming machine (10) according to any one of Claims 2 to 16 wherein the support (12) includes at least one auxiliary nozzle (32) connected to a source of heated air to direct heated air towards the heated belt feed.

18. A hemming machine (10) according to any one or more of Claims I to 17 wherein the hot melt adhesive strip (44) is a hot melt film.

19. A hemming machine (10) according any one or more of Claims 1 to 17 wherein the hot melt adhesive strip (44) is a laminated structure comprising an elastic substrate having hot melt adhesive film laminated to opposite surfaces thereof.

20. A sewing machine conversion kit to convert a sewing machine into a hemming machine for hemming a textile article using an adhesive strip comprising an attachment adapted to replace a sewing machine presser foot, the attachment including a heated belt feed.

21. A sewing machine conversion kit according to Claim 20 wherein the belt feed includes a body (16) adapted to be heated and a belt extending around the body.

22. A sewing machine conversion kit according to Claim 21 wherein the body (16) includes a nozzle (34) adapted to receive heated air and direct the heated air into the internal space of a hem formed in a textile article containing a hot melt strip (44) to pre-melt the hot melt strip, downstream of the belt feed.

23. A method of hemming a textile article using a hot melt adhesive strip (44) comprising the steps of:
(i) folding a marginal edge of the textile article to form a hem and inserting an adhesive strip such that the adhesive strip is located in the internal space of the hem; and
(ii) feeding the hem between a heated belt feed and a support (12), the belt feed applying heat and pressure to the hem to seal the hem.

24. A method of hemming a textile article according to Claim 23 wherein step (i) further includes the sub-step of laying the adhesive strip (44) on the marginal edge of the textile article prior to folding the marginal edge of the textile article to form a hem.

25. A method of hemming a textile article according to Claim 24 further including the step of directing a jet of heated to the internal space of the hem, to pre-melt the hot melt adhesive strip (44), prior to feeding the hem between the heated belt feed and the support (12).

26. A method of hemming a textile article according to Claim 24 or Claim 25 further including the step of directing one or more jets of heated air towards the envelope while feeding the envelope between the heated belt feed and the support (12).

27. A method of hemming a textile article according to any of Claims 24 to 26 wherein the hot melt strip (44) is a hot melt film.

28. A method of hemming a textile article according to any of Claims 24 to 26 wherein the hot melt strip (44) is a laminated structure comprising an elastic substrate having hot melt film laminated to opposite surfaces thereof.

## Patentansprüche

1. Saummaschine (10) zum Erstellen eines Saums eines textilen Produkts unter Verwendung eines Heißklebestreifens (44) mit einer Abstützung oder Auflage (12) und einer beheizten Zuführbaugruppe (14) zum Bewegen oder Ziehen des textilen Produkts über die Abstützung oder Auflage und Erwärmen des Klebers durch das textile Produkt, wobei die Zuführbaugruppe (14) einen Zuführgurt besitzt, der geeignet ausgebildet oder angeordnet ist für eine Bewegung zwischen einer ersten Position, bei der der Zuführgurt beabstandet ist von der Abstützung oder Auflage zur Ermöglichung des Einsetzens oder Beschickens eines textilen Produktes zwischen den Zuführgurt und die Abstützung oder Auflage, und einer zweiten Position, bei der der Zuführgurt derart in Richtung der Abstützung oder Auflage bewegt wird oder ist, dass, wenn ein textiles Produkt zwischen dem Zuführgurt und der Abstützung oder Auflage angeordnet ist, der Zuführgurt das textile Produkt gegen die Abstützung oder Auflage presst.

2. Saummaschine (10) nach Anspruch 1, **dadurch gekennzeichnet, dass** der Zuführgurt erwärmt oder beheizt ist.

3. Saummaschine (10) nach Anspruch 2, **dadurch gekennzeichnet, dass** der erwärmte Zuführgurt einen angetriebenen Gurt (18) aufweist, der sich um einen erwärmten Körper (16) erstreckt, der Wärme zu dem Gurt überträgt.

4. Saummaschine (10) nach einem der vorhergehenden Ansprüche, **dadurch gekennzeichnet, dass** eine zweite Zuführbaugruppe (22) vorhanden ist, wobei die erste und zweite Zuführbaugruppe (14, 22) geeignet zur Zuführung eines textilen Produktes über die Abstützung oder die Auflage (12) von gegenüberliegenden Seiten des textilen Produkts ausgebildet oder angeordnet sind.

5. Saummaschine (10) nach einem der vorhergehenden Ansprüche, **dadurch gekennzeichnet, dass** die Abstützung oder Auflage (12) ein Plattenelement (20) aufweist.

6. Saummaschine (10) nach Anspruch 5, **dadurch gekennzeichnet, dass** das Plattenelement (20) zumindest teilweise mit Teflon (RTM) abgedeckt oder überdeckt ist.

7. Saummaschine (10) nach Anspruch 5 oder 6, **dadurch gekennzeichnet, dass** ein frei laufender Gurt sich über oder um das Plattenelement (20) erstreckt, so dass dieser eine Unterseite eines textilen Produkts kontaktiert, welches durch den erwärmten Zuführgurt über das Plattenelement gezogen wird.

8. Saummaschine (10) nach Anspruch 4, 5 oder 6, **dadurch gekennzeichnet, dass** die zweite Zuführbaugruppe (22) einen angetriebenen Gurt aufweist, der sich über oder um das Plattenelement (20) erstreckt, so dass dieser eine Unterseite eines textilen Produkts kontaktiert, der durch den Zuführgurt über das Plattenelement gezogen wird.

9. Saummaschine (10) nach einem der Ansprüche 5-8, **dadurch gekennzeichnet, dass** das Plattenelement (20) erwärmt wird oder ist.

10. Saummaschine (10) nach einem der vorhergehenden Ansprüche, **dadurch gekennzeichnet, dass** der oder jeder Gurt aus oder mit Teflon (RTM) gebildet oder geformt ist.

11. Saummaschine (10) nach Anspruch 4, **dadurch gekennzeichnet, dass** die zweite Zuführbaugruppe (22) einen Zuführgreifer aufweist.

12. Saummaschine (10) nach Anspruch 11, **dadurch gekennzeichnet, dass** die zweite Zuführbaugruppe (22) ein Paar von Zuführgreifern (24, 26) besitzt, die geeignet ausgebildet oder angeordnet sind zur Bereitstellung einer differentiellen Zuführung.

13. Saummaschine (10) nach Anspruch 11 oder 12, **dadurch gekennzeichnet, dass** die Abstützung oder Auflage (12) ein Plattenelement (20) besitzt und der oder jeder Zuführgreifer (24, 26) geeignet ausgebildet oder angeordnet ist, so dass dieser durch eine Öffnung (28, 30, 31), die in dem Plattenelement (20) vorgesehen ist, vorsteht.

14. Saummaschine (10) nach einem der vorhergehenden Ansprüche, **dadurch gekennzeichnet, dass** ein Saum-bildendes Mittel (36) vorgesehen ist, welches stromabwärts des Zuführgurts angeordnet ist.

15. Saummaschine (10) nach einem oder mehreren der Ansprüche 2 bis 14, **dadurch gekennzeichnet, dass** weiterhin eine Düse (34) oder ein Auslass vorgesehen ist, die oder der mit einer Quelle erwärmter Luft verbunden ist und geeignet ausgebildet oder angeordnet ist, um erwärmte Luft in den Zwischen- oder Innenraum eines Saums, der in einem textilen Produkt geformt ist und einen Heißklebestreifen (44) enthält, zu leiten, um den Heißklebestreifen stromabwärts des erwärmten Zuführgurts vorzuschmelzen oder zu erweichen.

16. Saummaschine (10) nach Anspruch 3 oder Anspruch 15 in Rückbeziehung auf Anspruch 3, **dadurch gekennzeichnet, dass** die Düse (34) oder der Auslass in dem erwärmten Körper (16) vorgesehen ist.

17. Saummaschine (10) nach einem der Ansprüche 2 bis 16, **dadurch gekennzeichnet, dass** die Abstützung oder Auflage (12) mindestens eine Hilfsdüse oder einen Hilfsauslass (32) aufweist, die oder der mit einer Quelle erwärmter Luft verbunden ist, um erwärmte Luft in Richtung des erwärmten Zuführgurts zu leiten.

18. Saummaschine (10) nach einem oder mehreren der Ansprüche 1 bis 17, **dadurch gekennzeichnet, dass** der Heißklebestreifen (44) ein Heißklebefilm ist.

19. Saummaschine (10) nach einem oder mehreren der Ansprüche 1 bis 17, **dadurch gekennzeichnet, dass** der Heißklebestreifen (44) eine laminierte Struktur ist mit einem elastischen Substrat, auf dessen gegenüberliegende Oberflächen ein Heißklebefilm laminiert ist.

20. Umwandlungsset zum Umwandeln einer Nähmaschine in eine Saummaschine zum Erstellen eines Saums eines textilen Produkts unter Einsatz eines Klebestreifens mit einer Befestigung oder Halterung, die geeignet gestaltet ist zum Ersetzen eines Pressfußes einer Nähmaschine, wobei die Halterung oder Befestigung einen erwärmten Zuführgurt aufweist.

21. Umwandlungsset nach Anspruch 20, **dadurch gekennzeichnet, dass** der Zuführgurt einen Körper (16) aufweist, der geeignet gestaltet ist, um erwärmt zu werden, und dass ein Gurt vorgesehen ist, der sich um den Körper erstreckt.

22. Umwandlungsset nach Anspruch 21, **dadurch gekennzeichnet, dass** der Körper (16) einen Auslass oder eine Düse (34) aufweist, der oder die geeignet gestaltet ist, um erwärmte Luft zu empfangen und die erwärmte Luft in einen Innen- oder Zwischenraum eines Saums, der in einem textilen Produkt gebildet ist und einen Heißklebestreifen (44) beinhaltet, zu leiten, um den Heißklebestreifen stromabwärts des Zuführgurts vorzuerwärmen oder vorzuschmelzen.

23. Verfahren zur Erstellung eines Saums eines textilen Produkts unter Einsatz eines Heißklebestreifens (44) mit den folgenden Verfahrensschritten:
(i) Falten eines geringfügigen Randes des textilen Produktes zur Ausbildung eines Saums und Einsetzen eines Klebestreifens derart, dass der Klebestreifen in dem Zwischen- oder Innenraum des Saums angeordnet ist; und
(ii) Zuführen des Saums zwischen einen erwärmten Zuführgurt und eine Auflage oder Abstützung (12), wobei der Zuführgurt Wärme und Druck auf den Saum aufbringt zur Verbindung, Abdichtung oder Herstellung der Wirkverbindung des Saums.

24. Verfahren zum Herstellen eines Saums eines textilen Produkts nach Anspruch 23, **dadurch gekennzeichnet, dass** der Verfahrensschritt (i) weiterhin den Unter-Verfahrensschritt des Auflegens des Klebestreifens (44) auf den geringen Rand des textilen Produkts vor dem Falten des geringen Randes des textilen Produkts zur Ausbildung eines Saums aufweist.

25. Verfahren zur Herstellung eines Saums eines textilen Produkts nach Anspruch 24, **dadurch gekennzeichnet, dass** der Verfahrensschritt eines Leitens eines Stroms erwärmter Luft in den Zwischen- oder Innenraum des Saums vorgesehen ist zum Vorerwärmen oder Vorschmelzen des Heißklebestreifens (44) vor dem Zuführen des Saums zwischen den erwärmten Zuführgurt und die Abstützung oder Auflage (12).

26. Verfahren zur Herstellung eines Saums eines textilen Produkts nach Anspruch 24 oder 25, **dadurch gekennzeichnet, dass** der Verfahrensschritt eines Leitens eines oder mehrerer Ströme erwärmter Luft in Richtung des Umschlags, der Hülle oder des Saums während der Zufuhr des Umschlags, der Hülle oder des Saums zwischen den erwärmten Zuführgurt und die Abstützung oder Auflage (12) vorgesehen ist.

27. Verfahren zur Herstellung eines Saums eines textilen Produkts nach einem der Ansprüche 24 bis 26, **dadurch gekennzeichnet, dass** der Heißklebestreifen (44) ein Heißklebefilm ist.

28. Verfahren zur Herstellung eines Saums eines textilen Produkts nach einem der Ansprüche 24 bis 26, **dadurch gekennzeichnet, dass** der Heißklebestreifen (44) eine laminierte Struktur ist, die ein elastisches Substrat aufweist mit einem auf gegenüberliegende Oberflächen von diesem laminierten Heißklebefilm.

## Revendications

1. Machine à ourler (10) pour ourler un article textile en utilisant une bande adhésive thermofusible (44), comportant un support (12) et un dispositif d'entraînement chauffé (14) conçu pour tirer un article textile à travers le support et chauffer l'adhésif à travers l'article textile, le dispositif d'entraînement (14) incluant un entraînement par bande conçu pour se déplacer entre une première position dans laquelle l'entraînement par bande est espacé du support afin de permettre l'insertion d'un article textile entre l'entraînement par bande et le support, et une seconde position dans laquelle l'entraînement par bande est déplacé vers le support de telle sorte que, lorsqu'un article textile est positionné entre l'entraînement par bande et le support, l'entraînement par bande presse l'article textile contre le support.

2. Machine à ourler (10) selon la revendication 1, dans laquelle l'entraînement par bande est chauffé.

3. Machine à ourler (10) selon la revendication 2, dans laquelle l'entraînement par bande chauffé inclut une bande entraînée (18) s'étendant autour d'un corps chauffé (16) qui transmet de la chaleur à la bande.

4. Machine à ourler (10) selon l'une quelconque des revendications précédentes, incluant en outre un second dispositif d'entraînement (22), les premier et second dispositifs d'entraînement (14, 22) étant conçus pour entraîner un article textile à travers le support (12) à partir de côtés opposés de l'article textile.

5. Machine à ourler (10) selon l'une quelconque des revendications précédentes, dans laquelle le support (12) inclut un élément à plaque (20).

6. Machine à ourlet (10) selon la revendication 5, dans laquelle l'élément à plaque (20) est recouvert, au moins en partie, de Téflon (RTM).

7. Machine à ourler (10) selon la revendication 5 ou la revendication 6, dans laquelle une bande à course libre s'étend autour de l'élément à plaque (20) de telle sorte qu'elle est en contact avec une surface inférieure d'un article textile tiré à travers l'élément à plaque par l'entraînement par bande chauffé.

8. Machine à ourler (10) selon la revendication 4 et la revendication 5 ou la revendication 6, dans laquelle le second dispositif d'entraînement (22) inclut une bande entraînée s'étendant autour de l'élément à plaque (20) de telle sorte qu'elle est en contact avec une surface inférieure d'un article textile tiré à travers l'élément à plaque par l'entraînement par bande.

9. Machine à ourler (10) selon l'une quelconque des revendications 5 à 8, dans laquelle l'élément à plaque (20) est chauffé.

10. Machine à ourler (10) selon l'une quelconque des revendications précédentes, dans laquelle la ou chaque bande est formée de Téflon (RTM).

11. Machine à ourler (10) selon la revendication 4, dans laquelle le second dispositif d'entraînement (22) inclut un entraînement à griffes.

12. Machine à ourler (10) selon la revendication 11, dans laquelle le second dispositif d'entraînement (22) inclut une paire d'entraînements à griffes (24, 26) conçus pour produire un entraînement différentiel.

13. Machine à ourler (10) selon la revendication 11 ou la revendication 12, dans laquelle le support (12) inclut un élément à plaque (20) et l'entraînement ou chaque entraînement à griffes (24, 26) est conçu pour faire saillie à travers une ouverture (28, 30, 31) agencée dans l'élément à plaque (20).

14. Machine à ourler (10) selon l'une quelconque des revendications précédentes, incluant en outre des moyens de formation d'ourlet (36) positionnés en aval de l'entraînement par bande.

15. Machine à ourler (10) selon l'une quelconque ou plusieurs des revendications 2 à 14, incluant également une buse (34) reliée à une source d'air chauffé et conçue pour diriger de l'air chauffé dans l'espace intérieur d'un ourlet formé dans un article textile contenant une bande thermofusible (44), afin de faire préalablement fondre la bande adhésive thermofusible, en aval de l'entraînement par bande chauffé.

16. Machine à ourler (10) selon la revendication 3 ou la revendication 15 lorsqu'elle dépend de la revendication 3, dans laquelle la buse (34) est agencée dans le corps chauffé (16).

17. Machine à ourler (10) selon l'une quelconque des revendication 2 à 16, dans laquelle le support (12) inclut au moins une buse auxiliaire (32) reliée à une source d'air chauffé pour diriger de l'air chauffé vers l'entraînement par bande chauffé.

18. Machine à ourler (10) selon l'une quelconque ou plusieurs des revendications 1 à 17, dans laquelle la bande adhésive thermofusible (44) est un film thermofusible.

19. Machine à ourler (10) selon l'une quelconque ou plusieurs des revendications 1 à 17, dans laquelle la bande adhésive thermofusible (44) est une structure laminée comportant un substrat élastique ayant un film adhésif thermofusible laminé sur des surfaces opposées de celui-ci.

20. Kit de conversion pour machine à coudre pour convertir une machine à coudre en une machine à ourler afin d'ourler un article textile en utilisant une bande adhésive, comportant un accessoire adapté pour remplacer un pied presseur de machine à coudre, l'accessoire incluant un entraînement par bande chauffé.

21. Kit de conversion pour machine à coudre selon la revendication 20, dans lequel l'entraînement par bande inclut un corps (16) adapté pour être chauffé et une bande s'étendant autour du corps.

22. Kit de conversion pour machine à coudre selon la revendication 21, dans lequel le corps (16) inclut une buse (34) adaptée pour recevoir de l'air chauffé et diriger l'air chauffé dans l'espace intérieur d'un ourlet formé dans un article textile contenant une bande thermofusible (44), afin de faire préalablement fondre la bande thermofusible, en aval de l'entraînement par bande.

23. Procédé pour ourler un article textile en utilisant une bande adhésive thermofusible (44), comportant les étapes consistant à :
(i) plier un bord marginal de l'article textile pour former un ourlet et insérer une bande adhésive de telle sorte que la bande adhésive est positionnée dans l'espace intérieur de l'ourlet, et
(ii) entraîner l'ourlet entre un entraînement par bande chauffé et un support (12), l'entraînement par bande appliquant de la chaleur et une pression à l'ourlet afin de sceller l'ourlet.

24. Procédé pour ourler un article textile selon la revendication 23, dans lequel l'étape (i) inclut en outre la sous-étape consistant à poser la bande adhésive (44) sur le bord marginal de l'article textile avant de plier le bord marginal de l'article textile afin de former un ourlet.

25. Procédé pour ourler un article textile selon la revendication 24, incluant de plus l'étape consistant à diriger un jet d'air chauffé dans l'espace intérieur de l'ourlet, afin de faire préalablement fondre la bande adhésive thermofusible (44), avant d'entraîner l'ourlet entre l'entraînement par bande chauffé et le support (12).

26. Procédé pour ourler un article textile selon la revendication 24 ou la revendication 25, incluant également l'étape consistant à diriger un ou plusieurs jets d'air chauffé vers l'enveloppe tout en entraînant l'enveloppe entre l'entraînement par bande chauffé et le support (12).

27. Procédé pour ourler un article textile selon l'une quelconque des revendications 24 à 26, dans lequel la bande thermofusible (44) est un film thermofusible.

28. Procédé pour ourler un article textile selon l'une quelconque des revendications 24 à 26, dans lequel la bande thermofusible (44) est une structure laminée comportant un substrat élastique ayant un film thermofusible laminé sur des surfaces opposées de celui-ci.
